# EUROPEAN PATENT APPLICATION

(11) **EP 4 407 478 A1**
(43) Date of publication of application: **31.07.2024**
(21) Application number: 22872906.7
(22) Date of filing: 21.09.2022
(51) Int. Cl.: G06F 16/9035

(54) **RECOMMENDATION SYSTEM**

(30) Priority: 21.09.2021 JP 2021153235
(71) Applicant: AISIN CORPORATION, Kariya-shi, Aichi 448-8650 (JP)
(72) Inventor: YOSHIMURA Shiko, Kariya-shi, Aichi 448-8650 (JP); DICARLANTONIO Ron, Toronto, Ontario, M4P 1G8 (CA); FARMANER Gary, Toronto, Ontario, M4P 1G8 (CA)
(74) Representative: Kramer Barske Schmidtchen Patentanwälte PartG mbB
(86) International application number: PCT/JP2022/035054
(87) International publication number: WO 2023/048154

(57) **Abstract**

To provide a system capable of improving the possibility of updating user information to user information (a user profile) matching the tastes and preferences of a user himself or herself. A recommendation system includes a user information acquisition unit that acquires user information indicating an interest of a user in a content to be provided, an output unit that outputs request information requesting the user to input information related to a content with a relatively small amount of information as compared with a predetermined comparison target in information for each content recorded in a recording medium as the user information, and an update unit that updates the user information on the basis of information input by the user in response to the request information.

## Description

### CROSS REFERENCE TO RELATED APPLICATIONS

This application is a National Stage of International Application No. PCT/JP2022/035054 filed September 21, 2022, claiming priority based on Japanese Patent Application No. 2021-153235 filed September 21, 2021, the entire contents of which are incorporated in their entirety.

### TECHNICAL FIELD

The present disclosure relates to a recommendation system.

### BACKGROUND ART

Conventionally, a technique of referring to user information (also referred to as "user profile") in a WEB site such as a shopping site and recommending a product or the like to an individual user is known. For example, Patent Literature 1 discloses a configuration in which the profile of a target user is estimated using the profile of another user to update the profile of the target user. In addition, Patent Literature 2 discloses a technique of refining a user's own profile using another user profile with similar interests.

### CITATIONS LIST

### PATENT LITERATURE

Patent Literature 1: WO 03/017137
Patent Literature 2: JP 2000-132559 A

### SUMMARY OF DISCLOSURE

### TECHNICAL PROBLEMS

In the configurations of Patent Literature 1 and Patent Literature 2, since the tastes and preferences of a target user are estimated using the user profile of another person (that is, the history of another person or the user information of another person), there may be a case where the profile is not updated to the profile matching the tastes and preferences of the target user.

The present disclosure has been made in view of the above problems, and an object of the present disclosure is to provide a system capable of improving the possibility of updating user information to user information (that is, user profile) matching the tastes and preferences of the user himself or herself.

### SOLUTIONS TO PROBLEMS

In order to achieve the above object, a recommendation system includes a user information acquisition unit that acquires user information indicating an interest of a user in a content to be provided, an output unit that outputs request information for requesting the user to input information related to a content with a relatively small amount of information as compared with a predetermined comparison target in information for each content recorded in a recording medium as the user information, and an update unit that updates the user information on the basis of information input by the user in response to the request information.

That is, the recommendation system requests the user to input the information related to the content with a relatively small amount of information as compared with the predetermined comparison target in the user information, and updates the user information on the basis of the information input by the user in response to the request. That is, it is possible to increase information reflecting the preferences of the user in the information related to a content that does not meet a criterion.

### BRIEF DESCRIPTION OF DRAWINGS

Fig. 1 is a block diagram illustrating a configuration of a recommendation system.
Fig. 2A is a diagram illustrating an example of content information, and Fig. 2B is a diagram illustrating an example of user information.
Fig. 3 is a flowchart illustrating an example of user information update processing.
Fig. 4 is a diagram illustrating another example of the user information.
Fig. 5 is a flowchart illustrating another example of the user information update processing.

### DESCRIPTION OF EMBODIMENTS

Here, embodiments of the present disclosure will be described in the following order.
(1) Configuration of Recommendation System:
(2) User Information Update Processing:
(3) Other Embodiments:

### (1) Configuration of Recommendation System:

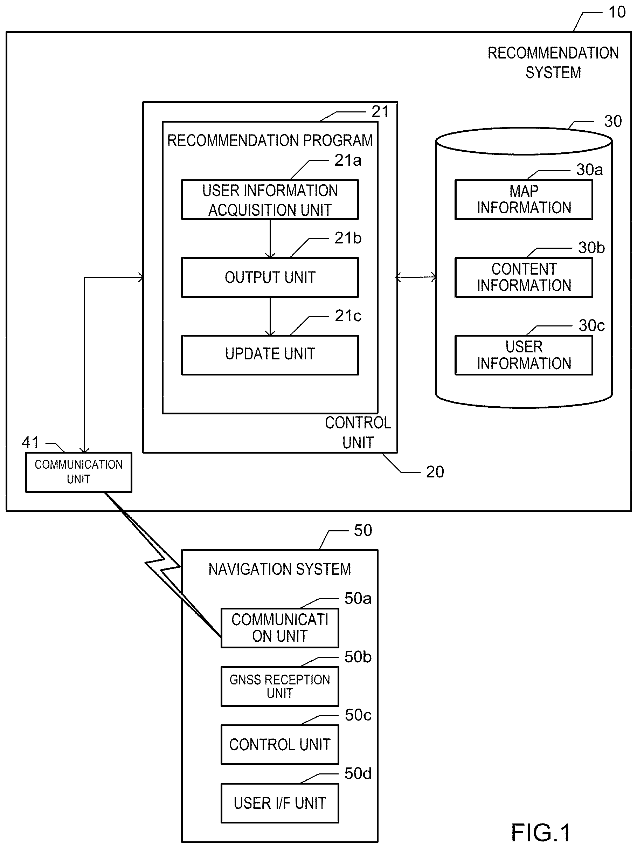

Fig. 1 is a block diagram illustrating a configuration of a recommendation system 10 according to the present disclosure. In the present embodiment, the recommendation system 10 includes a server computer, and recommends a content to a user of a navigation system 50 as a client. There may be a plurality of clients of the recommendation system 10, but one of which is illustrated in Fig. 1. The content recommended in the present embodiment is a facility (point of interest (POI)) that can be set as a destination or the like in a navigation system.

The recommendation system 10 includes a control unit 20 including a CPU, a RAM, a ROM, and the like, a recording medium 30, and a communication unit 41, and can execute a program stored in the recording medium 30 or the ROM in the control unit 20. In the present embodiment, a recommendation program 21 can be executed as this program. The communication unit 41 includes a circuit that communicates with the navigation system 50, and the control unit 20 can communicate with the navigation system 50 by processing of the recommendation program 21.

The navigation system 50 is a device having a navigation function to a destination. The navigation system 50 may be configured as an in-vehicle device, or may be configured as a portable terminal such as a tablet or a smartphone. The navigation system 50 includes a communication unit 50a, a GNSS reception unit 50b, a control unit 50c, and a user I/F unit 50d. The control unit 50c includes a CPU, a ROM, a RAM, and a recording medium, and the CPU can execute various programs including a navigation program recorded in the ROM or the recording medium.

The communication unit 50a includes a communication circuit for wirelessly communicating with other devices. The navigation system 50 can communicate with the recommendation system 10 by the communication unit 50a. The user I/F unit 50d is an interface unit with which the user inputs an instruction and which provides various types of information to the user. The user I/F unit 50d includes a touch panel display, a switch, a speaker, and the like (not illustrated). That is, the user I/F unit 50d includes an output unit of an image and a sound, and an input unit of an instruction from the user.

The GNSS reception unit 50b is a device that receives a global navigation satellite system signal. The GNSS reception unit 50b receives a radio wave from a navigation satellite, and outputs a signal for calculating the position of the navigation system 50 via an interface (not illustrated). By executing the navigation program, the control unit 50c acquires this signal and acquires the position of the navigation system 50. Furthermore, the control unit 50c acquires time from a clocking unit (not illustrated). In a case where the position of the navigation system 50 stays within the predetermined range for a predetermined time or more on the basis of the position and the time, the control unit 50c estimates that the user of the navigation system 50 stays at the position. The control unit 50c specifies a facility present at the position on the basis of map information. Note that the map information may be recorded in a recording medium of the navigation system 50 or may be acquired from a navigation server (not illustrated). In any case, the map information includes at least facility data including a position, a name, a facility ID, a telephone number, a facility genre, and the like of a facility that can be a POI. The control unit 50c transmits the facility ID of the facility where the user is estimated to visit or stay to the recommendation system 10 in association with a user ID.

In addition, when the user operates the user I/F unit 50d to input a review of the facility visited by the user to the navigation system 50, the control unit 50c transmits review data to the recommendation system 10 in association with the user ID. In the present embodiment, the review data includes at least text data. Note that it is needless to mention that image data captured in the time period of stay in the facility may be included in the review data. Furthermore, when the user operates the user I/F unit 50d to input a favorite facility genre, the control unit 50c transmits the favorite facility genre of the user to the recommendation system 10 in association with the user ID.

In the navigation system 50, in a case where predetermined conditions for presenting a recommended facility are satisfied (for example, in a case where the user performs a specific operation such as a facility search for setting a destination), the control unit 50c transmits a recommendation request to the recommendation system 10 together with the user ID. Note that, in the present embodiment, the recommendation request includes a target area, and the recommendation system 10 acquires a facility in the target area as a recommended facility. The control unit 50c displays the facility returned from the recommendation system 10 in response to the recommendation request on the display unit of the user I/F unit 50d or outputs the facility by voice. Note that the predetermined conditions may include, in addition to that the user performs the specific operation such as the facility search for setting the destination, that a predetermined time elapses, that the user moves by a predetermined distance, and the like. The target area may be an area designated by the user, or may be a predetermined range including the current location.

The recommendation system 10 acquires data transmitted from the navigation system 50 via the communication unit 41. In the recording medium 30 of the recommendation system 10, map information 30a, content information 30b, and user information 30c are recorded.

The map information 30a includes node data indicating the position of a node corresponding to an end point of a road section, shape interpolation point data indicating the position of a shape interpolation point for specifying the shape of a road between nodes, and the like, link data indicating a link connecting the nodes, and the like. Here, the node corresponds to an intersection, and the link corresponds to a road section from an intersection to an intersection. The map information 30a is used for specifying the position of a vehicle, searching for a route to a destination, guiding a route, and the like. The map information 30a further includes facility information. The facility information includes a facility ID for identifying a facility, facility coordinates, a facility genre (for example, a restaurant, a convenience store, or the like), and the like.

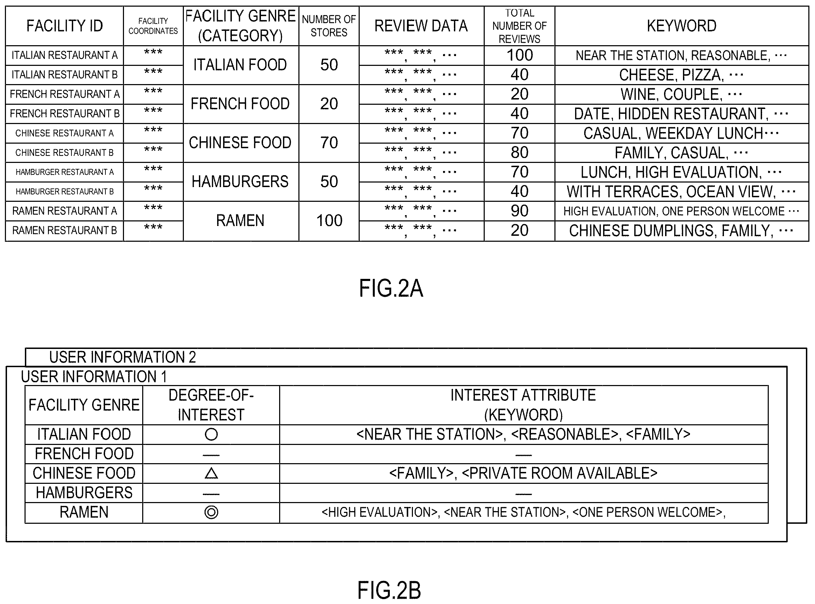

The content information 30b is data in which various pieces of information related to the facility are associated with the facility ID of each content, that is, in the case of the present embodiment, each facility. Fig. 2A is a diagram illustrating a configuration example of the content information 30b. The content information 30b includes a plurality of records individually corresponding to a plurality of facilities (restaurant facilities in the present embodiment). The record corresponds to each row shown in Fig 2A. In each record, a facility ID, facility coordinates, a facility genre (category), the number of stores, review data, the total number of reviews, and a keyword (attribute) are associated with each other.

The facility ID is information for identifying a facility, and corresponds to the facility ID in the map information 30a. The facility coordinates are information indicating the position coordinates of a providing facility, and correspond to the facility coordinates included in the map information 30a. The facility genre is information indicating a product type provided by the providing facility. In the present embodiment, the facility genre includes Italian food, French food, Chinese food, hamburgers, and ramen as a food genre. Note that the facility genre is not limited thereto, and the definition of the facility genre is not limited to the embodiment. As another example, it may be indicated by a larger classification (or a fine classification) such as fast food or desserts. That is, the facility genre may have a hierarchical structure.

The number of stores is the number of stores corresponding to each facility genre, and for example, in a case where the facility genre is an Italian restaurant, the number of stores is 50. The review data is data indicating an evaluation based on an impression, a score, or the like that the user has of the facility, and text data and a score associated with the user ID of the user who has performed the review are stored. Note that, in Fig. 2A, the review data has a review for each facility ID, and on the other hand, the number of stores is associated with a common value for facilities of the same genre. Furthermore, the review data is transmitted from the navigation system 50 or other various information terminals to the recommendation system 10 in association with the user ID.

The total number of reviews is a number obtained by counting and accumulating reviews from the individual users, and it can be said that the popularity of the facility increases as the total number of reviews increases. Note that one user can post only one review to one facility. The keyword is a phrase preset on the facility side (for example, near the station, reasonable, hidden restaurant, and the like) or a phrase extracted from the user's review data (for example, good cost performance). Note that, although not illustrated in the configuration example of Fig. 2A, the content information 30b may further include a name, an address, a telephone number, and the like of the facility in association with the facility ID.

The user information 30c is data in which various types of information related to the user are associated with the user ID, and is also referred to as a user profile. Fig. 2B is a diagram illustrating a configuration example of the user information 30c. In the user information 30c illustrated here, data of a plurality of users (user information 1, user information 2, ...) is recorded, and information (user information 1) of a specific target user will be described below as an example. The user information 30c includes a plurality of records individually corresponding to a plurality of facility genres (genres of restaurant facilities in the present embodiment). The record corresponds to each row shown in Fig 2B. In each record, the degree-of-interest indicating the interest of the user and the interest attribute (keyword) are associated with each other. That is, in the present embodiment, the content to be provided is information related to a facility, and the user information 30c indicates an interest in the facility as the content.

The degree-of-interest indicates whether or not the user has an interest in the facility genre, that is, the degree-of-interest is an index indicating the preference of the user for the corresponding facility genre or the degree-of-interest of the user in the corresponding facility genre in multiple stages. For example, in the example illustrated in Fig. 2B, the degree-of-interest in Italian food is indicated by "o", the degree-of-interest in Chinese food is indicated by "Δ", and the degree-of-interest in ramen is indicated by "⊚". For each symbol indicating the degree-of-interest, "⊚" has the highest interest, and thereafter, the degree-of-interest decreases in the order of "o" and "Δ". Note that, although not illustrated here, in a case where the symbol is "×", the degree-of-interest is the lowest. In addition, the symbol "-" for hamburgers or French food means that there is no data yet for hamburgers or French food (that is, it is unknown).

The interest attribute indicates an attribute in which the user is interested, and for example, favorite facility information (store name) in which the user is interested and a keyword (for example, near the station, high evaluation, and the like) in which the user is interested are recorded. In the present embodiment, the degree-of-interest and the interest attribute are recorded on the basis of information transmitted from the navigation system 50. Note that the interest attribute may also include a facility that the user has used in the past, a facility that the user has visited in the past, a facility registered as a favorite, a facility in which the user has created the review data, and the like in association with the user ID.

The recommendation program 21 executed by the control unit 20 of the recommendation system 10 is a program for causing a computer of the recommendation system 10 to function as a user information acquisition unit 21a, an output unit 21b, and an update unit 21c. That is, in the following description, processing described as being performed by the user information acquisition unit 21a, the output unit 21b, and the update unit 21c is processing performed by the control unit 20 (CPU).

The user information acquisition unit 21a acquires user information indicating the interest of the user in the content to be provided. Specifically, the user information acquisition unit 21a acquires user information indicating the interest of the user in a restaurant facility, which is an example of the content to be provided. Note that the content to be provided is information to be provided to the user, another device, or the like in any mode. Furthermore, in the present embodiment, the user information 30c is updated on the basis of the user information 30c of each user. Therefore, the user information acquisition unit 21a specifies the user whose user information is to be updated by the user ID, and acquires the user information 30c associated with the user ID. That is, the user information acquisition unit 21a acquires the degree-of-interest and the interest attribute associated with the user ID. Note that the user information acquisition unit 21a may automatically acquire the interest attribute from the history of the behavior of the user transmitted from the navigation system 50, for example, in addition to acquiring the facility genre or the keyword of interest input by the user as the interest attribute. For example, in a case where the user has used or visited facilities of the same facility genre a predetermined number of times or more in the past, the facility genre may be acquired as the interest attribute of the user.

The output unit 21b outputs request information for requesting the user to input information related to a content that does not meet a predetermined criterion in the user information. The predetermined criterion is a criterion for specifying the user information to be updated, and in the present embodiment, is a criterion for specifying a content whose amount of information is insufficient in the user information 30c. The insufficiency of the amount of information is determined, for example, on the basis of whether or not the amount of information is relatively small as compared with a predetermined comparison target. The predetermined comparison target for determining the insufficiency of the amount of information may be specified on the basis of the content information 30b or may be specified on the basis of the user information 30c.

Since the content information 30b is defined by associating various types of information with each content, in a case where the amount of the content information 30b is large, there is a high possibility that the popularity of the content is high, and the amount of information of the content with high popularity is relatively large in the user information 30c. Therefore, the amount of information of the content recorded in the content information 30b can be used as a criterion for determining whether or not the amount of information of the content in the user information 30c is insufficient. In this case, for example, when the amount of information with a predetermined ratio (for example, 10% or more) or more to the amount of information of the content recorded in the content information 30b is not recorded in the user information 30c as the information of the content, it can be considered that the user information 30c of the content is insufficient.

On the other hand, in the user information 30c, in a case where the amount of information of a specific content is relatively large but the amount of information of other contents is relatively small, it may be difficult to determine the preferences of the user on the basis of the latter contents. Therefore, for example, a predetermined threshold is set as a criterion, the amount of information of each content recorded in the user information 30c may be compared with the predetermined threshold, and the content whose amount of information is smaller than the predetermined threshold may be determined that the amount of information is insufficient. In addition, the amount of information of each content recorded in the user information 30c may be compared, and the content with the smallest amount of information or the predetermined number of contents in ascending order of the amount of information may be determined that the amount of information is insufficient.

In any case, the criterion for specifying the content whose amount of information is insufficient is determined in advance, and the output unit 21b acquires the content whose amount of information is insufficient (information-insufficient area) in the user information 30c on the basis of the criterion. Then, the output unit 21b makes an output to request the user to input information related to insufficient information. At that time, the output unit 21b asks the user a question about the contents of the insufficient information.

The update unit 21c updates the user information 30c on the basis of information input by the user in response to the request information from the output unit 21b. That is, the update unit 21c updates the user information 30c (that is, the user profile) using the information input by the user. In a case where the answer input from the user in response to the request from the output unit 21b is a positive answer, the information of the degree-of-interest and the interest attribute related to the content for which the answer has been obtained is updated. The degree-of-interest can be indicated in multiple stages as described above. Therefore, in a case where the answer from the user is a positive answer, for example, "⊚" or "o" is set so that the degree-of-interest of the corresponding facility genre increases, and the information is updated as the user information. Similarly, in a case where the answer input from the user to the request from the output unit 21b is a negative answer, for example, "Δ" or "×" is set so that the degree-of-interest of the corresponding facility genre decreases, and the information is updated as the user information. Furthermore, the update unit 21c receives an answer to a question from the output unit 21b, and updates information based on the answer.

When updating the user information 30c, the control unit 20 updates the user information using a profile of another person similar to the target user in a conventionally known system (for example, Patent Literature 1 and Patent Literature 2 described above). On the other hand, when the user information of the target user is updated using the profile of another person, the user information may not be updated to the user information matching the tastes and preferences of the target user. Therefore, in the present embodiment, when the user information 30c is updated by the control unit 20, the user information is updated to user information matching the tastes and preferences of the target user himself or herself.

Specifically, the control unit 20 acquires the user information of the target user from the user information 30c, and grasps insufficient information from the acquired user information. Here, information that is insufficient in the user information of the target user is grasped for the content information 30b. Specifically, the control unit 20 compares the content information 30b with the user information 30c, and grasps insufficient information (or an insufficient area) in the user information 30c of the target user.

Referring to Figs. 2A and 2B, information related to contents corresponding to Italian food, French food, Chinese food, hamburgers, and ramen are described in the content information 30b in Fig. 2A. On the other hand, information related to contents corresponding to Italian food, Chinese food, and ramen are described, but information related to contents corresponding to French food and hamburgers are not described in the user information (in the present embodiment, user information 1) of the target user in Fig. 2B. That is, in the user information 1, there is no information as to whether or not the target user is interested in French food and hamburgers, and thus information related to French food and hamburgers is insufficient. That is, it is unknown whether or not the target user is interested in French food and hamburgers. In other words, the information related to French food and hamburgers is regarded as the insufficient area in the user information 1. In the case of making such a determination, the criterion of whether or not it is insufficient information is a criterion of whether or not the amount of information is less than a predetermined ratio to the amount of information of each content recorded in the content information 30b. Therefore, in addition to a case where there is simply no data like French food and hamburgers in Fig. 2B, for example, in a case where data less than a predetermined ratio to the number of pieces of target facility information (the number of stores) recorded in the content information 30b is recorded in the user information 30c, it is determined that the criterion is not met. On the contrary, for example, in a case where data equal to or more than a predetermined ratio to the number of pieces of target facility information recorded in the content information 30b is recorded in the user information 30c, it is determined that the criterion is met.

Next, the control unit 20 extracts an item (store) that can be output to the user based on the current position of the user or the current time period from the insufficient information. That is, the control unit 20 extracts a recommended store based on the current position of the target user from hamburger restaurants and French restaurants as the insufficient information. Alternatively, the control unit 20 extracts a recommended store based on the current time period from hamburger restaurants and French restaurants as the insufficient information. Specifically, the control unit 20 extracts stores within a predetermined range from the current position of the user or stores that can provide hamburgers or French food in the current time period (for example, daytime) from facilities that provide hamburgers and facilities that provide French food in the content information 30b.

Next, the control unit 20 asks the user a question about the content of the extracted store. For example, in the present embodiment, it is assumed that, as a result of extracting stores under the condition of "the current position of the user or the current time period in the insufficient information" described above, a store "ABC Burger" is extracted as a store that provides hamburgers. In that case, the control unit 20 asks the target user whether or not the target user is interested in the content (that is, the facility genre or category) of "hamburgers" in the insufficient information. That is, for a content that does not meet a predetermined criterion as the user information 30c, output is performed to request the user to input information indicating whether or not the user is interested in the content (in other words, whether or not the user has an interest in the content). Note that this question (output) is output to the navigation system 50 via the communication unit 41. Then, when the communication unit 50a of the navigation system 50 acquires the question, the question is output to the user I/F unit 50d under the control of the control unit 50c. In a case where it is assumed that the navigation system 50 is mounted on a vehicle, the output to the user I/F unit 50d is preferably output from a speaker from the viewpoint of the operability of the vehicle. It is needless to mention that it may be output by various methods such as output from a display or output from both a speaker and a display.

Next, the control unit 20 determines whether or not there is an answer from the user. That is, the control unit 20 determines whether or not there is an answer to the question related to the insufficient information to the user. In other words, in the above example, it is determined whether or not there is any feedback that the user is interested or not interested to the question "Are you interested in hamburgers?". Note that the answer from the user is transmitted from the navigation system 50 to the recommendation system 10. In addition, the user may select "interested" or "not interested" by a voice input or by an input operation to the user I/F unit 50d. Alternatively, the user may answer by some gesture input.

Next, in a case where the user answers to the question related to the insufficient information, the control unit 20 stores the answer input from the user as the user information. That is, the control unit 20 learns the answer of the user to the question from the output unit 21b in the control unit 20 and updates the answer as the user information. In other words, the control unit 20 compensates for the insufficient information in the user information 30c. In the present embodiment, the update unit 21c in the control unit 20 receives, as input data to the user information 1, the answer to "question about hamburgers (Are you interested in hamburgers?)" that is the insufficient information in the present embodiment. In a case where the answer input from the user in response to the request from the output unit 21b is a positive answer, the update unit 21c updates information of the degree-of-interest and the interest attribute related to hamburgers answered by the user. The degree-of-interest can be indicated in multiple stages as described above. Therefore, in a case where the answer to hamburgers from the user is a positive answer, the degree-of-interest in hamburgers is "⊚" or "o", and the update unit 21c updates the information as the user information. On the other hand, in a case where the answer input from the user is a negative answer, the degree-of-interest in hamburgers is "Δ" or "×", and the update unit 21c updates the information as the user information.

Next, in a case where the user answers that the user is interested, the control unit 20 recommends a store in the content of interest to the user. That is, in a case where the user answers that the user is interested in the insufficient information, the control unit 20 recommends the store provided in the answer. In the present embodiment, as described above, "hamburgers" and "French food" are insufficient information, and "ABC Burger" is extracted based on the current position of the user, and a question is made as to whether or not the user is interested in "hamburgers". Therefore, the output unit 21b in the control unit 20 recommends "ABC Burger" as a specific item for the answer from the user. Furthermore, in a case where an answer to the recommendation is transmitted from the user, the update unit 21c in the control unit 20 receives the answer as input data to the user information 30c, that is, updates the user information 30c.

Next, an operation of the present embodiment will be described. As described above, in the present embodiment, the insufficient information is grasped by comparing the user information 30c of the target user with the content information 30b. In addition, the answer whether or not the target user is interested in the insufficient information is obtained by the input of the target user himself or herself, and the user information 30c is updated. Therefore, it is possible to compensate for the insufficient information in the user information 30c in the present embodiment, and the user information matching the tastes and preferences of the target user can be constructed. That is, it is possible to construct user information with high accuracy as compared with a case where user information is updated on the basis of user information of another person as in the conventional systems described in Patent Literature 1 and Patent Literature 2.

Furthermore, since specific stores in restaurant facilities are recommended to the user on the basis of the updated user information, the recommended user can select a store matching the tastes and preferences of the user.

Moreover, in the present embodiment, when the recommendation system 10 asks the navigation system 50 a question about insufficient information, a speaker or a touch panel display is used as a user interface. In particular, in a case where a speaker is used as the user interface, a question is output by voice. Therefore, for example, in a case where the navigation system 50 is mounted on a vehicle, the passenger can ask and answer a question by voice. As a result, it is possible to suppress or avoid hindrance of driving or the like, and it is possible to improve traveling safety.

In addition, in a conventionally known system, a content or an item is recommended by using user information or the like of a similar another person, and thus the target user frequently receives a proposal for the known content or item. On the other hand, in the present embodiment, the insufficient information is recommended on the basis of the input of the target user himself or herself, the target user can receive an unknown proposal of interest, as compared with a case where a content or an item is recommended using the user information of a similar another person. In other words, the target user can receive a content or an item in which the target user has an interest, and is novel and unexpected.

### (2) User Information Update Processing:

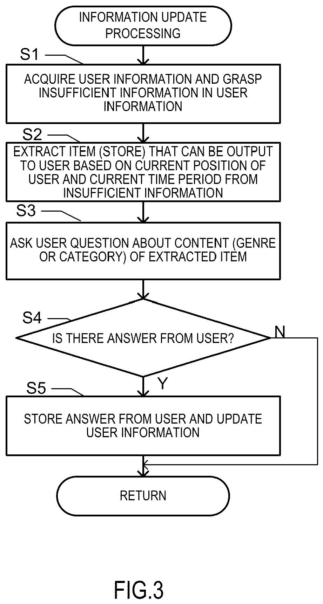

Next, user information update processing performed by the control unit 20 will be described. Fig. 3 is a flowchart illustrating an example of the user information update processing performed by the control unit 20. In the present embodiment, the user information update processing is started, for example, in a case where the navigation system 50 is activated. Alternatively, in a case where the navigation system 50 is mounted on a vehicle, the processing is started when an accessory power supply or an ignition power supply of the vehicle is turned on.

When the user information update processing is started, first, the control unit 20 acquires the user information of the target user from the user information 30c, and grasps insufficient information from the acquired user information (step S1). This is a step for grasping insufficient information in updating the user information of the target user. Specifically, the control unit 20 compares the user information 30c with the content information 30b, and grasps the user information 30c insufficient for the content information 30b. Note that the determination as to whether or not there is insufficient information in the user information 30c is made by not only simply determining that there is insufficient information in a case where there is no information corresponding to the content information 30b, but also determining that there is insufficient information in a case where there is corresponding information but the amount of information does not meet a predetermined criterion. In the examples of Figs. 2A and 2B, as described above, in the user information 1 of the target user, it is unknown whether or not the target user is interested in facilities that provide hamburgers and French food, and the interest attribute thereof is also unknown. Therefore, in the examples of Figs. 2A and 2B, hamburgers and French food correspond to the insufficient information of the target user.

Next, the control unit 20 extracts an item (store) that can be output to the user based on the current position of the user or the current time period from the insufficient information (step S2). That is, the control unit 20 extracts a store that can be recommended from hamburgers and French food which are insufficient information based on the current position of the target user or the current time period. Specifically, the control unit 20 acquires the current position of the target user, that is, the position of the navigation system 50, and extracts the store corresponding to the acquired current position of the target user from the facility coordinates corresponding to the facility IDs. It is assumed in the present embodiment that the store extracted in such a manner is "ABC Burger".

Next, the control unit 20 asks the user a question about the content of the extracted item (step S3). In the present embodiment, "ABC Burger" is extracted in step S2. That is, since the facility genre of the content of the extracted item (ABC Burger) is hamburgers, the target user is asked whether or not the target user is interested in hamburgers. In other words, the control unit 20 requests the target user to input information related to the content (insufficient information) that does not meet the criterion. This request (that is, output to the user) is output to the user I/F unit 50d such as a speaker of the navigation system 50.

Next, the control unit 20 determines whether or not there is an answer from the user (step S4). That is, the control unit 20 determines whether or not the target user answers the request to input the information related to the content that does not meet the criterion. Specifically, the control unit 20 determines whether or not the target user answers the question "Are you interested in hamburgers?" That is, it is determined whether or not there is any feedback from the target user. In a case where a negative determination is made in step S4, that is, in a case where there is no answer from the target user, the processing returns without performing the subsequent processing.

On the contrary, in a case where a positive determination is made in step S4, that is, in a case where there is an answer from the target user, the contents of the answer are stored as the user information of the target user, and the user information 30c is updated (step S5). That is, the control unit 20 receives the answer from the target user as input data from the target user, and updates the user information 30c. In the present embodiment, in a case where an answer such as "interested" or "not interested" in hamburgers is obtained, the control unit 20 receives either answer as the input data of the target user and updates the information as the user information 30c. That is, in the present embodiment, the user information 30c is updated on the basis of the input data of the target user himself or herself. As a result, at least a part of the insufficient information is updated. Note that the routine in the flowchart of Fig. 3 is repeatedly performed every predetermined short time at least until the insufficient information is complemented.

Furthermore, in step S5, in a case where there is an answer from the target user in step S4 and the answer is a positive answer (that is, in a case where the target user is interested in hamburgers), the item of the corresponding content may be recommended to the target user. That is, in the present embodiment, "ABC Burger" may be recommended to the target user. In addition, when "ABC Burger" is recommended, facility information of and routes to ABC Burger may also be displayed on a display or the like in the navigation system 50.

As described above, in the present embodiment, the user information 30c is updated on the basis of the input data of the target user himself or herself. Therefore, the user information 30c matches the tastes and preferences of the target user as compared with a case where the user information 30c of the target user is updated using the user information of another person.

### (3) Other Embodiments:

Next, another embodiment will be described. In the embodiment described above, in a case where the user information 30c is updated, the control unit 20 acquires insufficient information from the user information of a target user himself or herself, and asks the user whether or not the user is interested in the content of the insufficient information. Then, the control unit 20 updates the user information on the basis of the answer of the user to the question. On the other hand, as long as the user information can be updated to the user information matching the tastes and preferences of the target user himself or herself, the acquisition of the insufficient information is not limited to that based only on the user information of the target user himself or herself, and user information of another person may be included. For example, the control unit 20 may update the user information of the target user in consideration of the user information of another person similar to the target user in addition to the user information of the target user himself or herself. Hereinafter, a specific description will be given.

First, data of a plurality of users is recorded in the user information 30c as described above, and the user information of another person (hereinafter, referred to as "similar user") similar to the target user is included. Here, the similar user means a user whose interest in the content is similar to that of the target user. The similarity of interest can be evaluated for at least one of parameters indicating an interest, for example, a degree-of-interest and an interest attribute, and in a case where the matching degree of interest is evaluated by the parameter indicating an interest, it can be said that the interests are similar in a case where the matching degree is equal to or more than a threshold. The matching degree may be defined by various methods. For example, in a case where the degree-of-interest and the interest attribute match between the target user and the similar user, the matching degree is 100%. In addition, the matching rate may be specified by a ratio of the number of matches of the degree-of-interest and the interest attribute between the target user and the similar user. In a case where there is an item in which the degree-of-interest and the interest attribute are evaluated with multi-stage values, when a deviation in values between the target user and the similar user is equal to or less than a threshold, it may be evaluated that the target user and the similar user have similar interests in the item.

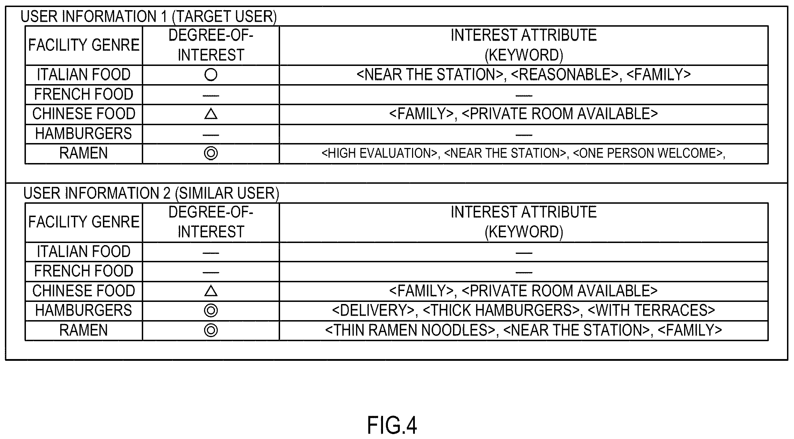

Fig. 4 illustrates an example of the user information 30c including the user information (user information 1) of the target user himself or herself and the user information (user information 2) of the similar user. The user information 1 is similar to the user information described in Fig. 2B. In the example illustrated in Fig. 4, in the user information of the similar user, the degree-of-interest in the facility genre "ramen" is "⊚", which is the same as the degree-of-interest of the target user in "ramen". Similarly, in the user information of the similar user, the degree-of-interest in the facility genre "Chinese food" is "Δ", which is the same as the degree-of-interest of the target user in "Chinese food". Note that for other facility genres, there is no information related to the degree-of-interest and the interest attribute of at least one of the target user or the similar user. In this manner, in the example illustrated in Fig. 4, the degree-of-interest of the target user matches the degree-of-interest of the user indicated by the user information 2 in 2/3 of facility genres ("Italian food", "ramen", and "Chinese food") in which the target user is interested. Therefore, in this example, the user information 2 is assumed as the user information similar to the user information 1.

Note that, although the example illustrated in Fig. 4 illustrates the example in which one piece of the user information of the similar user is included, the number of pieces of user information of the similar user included in the user information 30c is not limited to one, and a plurality of pieces of user information may be included.

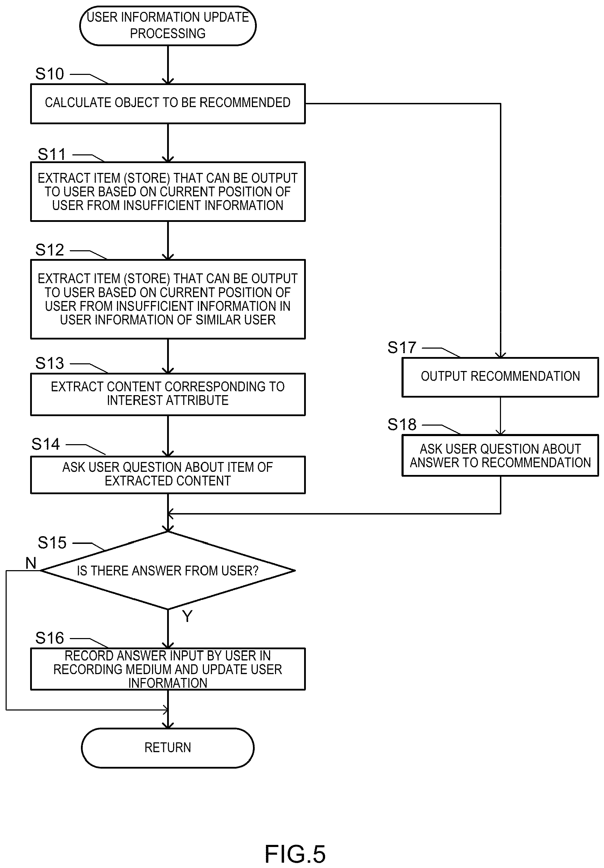

Next, user information update processing performed by the control unit 20 will be described. Fig. 5 is a flowchart illustrating an example of the user information update processing, and the flowchart illustrated in Fig. 5 is different from the flowchart of Fig. 3 in that processing based on the user information of the similar user is included. Note that the user information update processing illustrated in Fig. 5 is started, for example, in a case where the navigation system 50 is activated or in a case where an accessory power supply or an ignition power supply of a vehicle with the navigation system 50 mounted thereon is turned on, similarly to the example of Fig. 3. Hereinafter, the contents of the processing will be specifically described.

When the user information update processing is started, first, the control unit 20 calculates an object to be recommended to the target user (step S10). In the present embodiment, one of the information recorded as the content information 30b is calculated as the content to be recommended. Furthermore, in the present embodiment, since it is intended to perform update so as to compensate for the insufficiency of the user information 30c, a content corresponding to the insufficient information that is insufficient as the user information 30c is calculated. Specifically, by the function of the user information acquisition unit 21a, the control unit 20 compares the user information 30c with the content information 30b, and acquires insufficient information that is insufficient for the content information 30b in the user information 30c of the target user. The content information 30b is information generated on the basis of the user information of each user, and information related to French food and hamburgers is recorded in the content information 30b illustrated in Fig. 2A. On the other hand, in the user information 1 of the target user illustrated in Fig. 4, information related to French food and hamburgers is not recorded, that is, the information is insufficient. Note that the determination as to whether or not there is insufficient information is made by not only simply determining that the corresponding information is insufficient in a case where there is no information corresponding to the content information 30b, but also determining that the corresponding information is insufficient in a case where there is corresponding information but the amount of information does not meet a predetermined criterion. In the example illustrated in Fig. 4, as described above, in the user information 1 of the target user, it is unknown whether or not the target user is interested in facilities that provide hamburgers and French food, and the interest attribute thereof is also unknown. Therefore, in the examples of Fig. 4, "hamburgers and French food" correspond to the insufficient information of the target user.

Then, when acquiring the insufficient information, the control unit 20 calculates an object to be recommended on the basis of the acquired insufficient information by the function of the output unit 21b. As described above, in the example of Fig. 4, "hamburgers and French food" correspond to the insufficient information. Therefore, in step S10, the control unit 20 calculates (in other words, extracts) hamburgers and French food as objects to be recommended to the target user.

After calculating the object to be recommended to the target user, the control unit 20 proceeds the processing to step S11 and step S17. That is, in the embodiment illustrated in Fig. 5, when the object to be recommended is calculated, two processes are performed in parallel. Here, the processing in step S11 and subsequent steps (steps S11 to S16) is described first, and after the processing in step S11 and subsequent steps is described, the processing in step S17 and subsequent steps (steps S17 to S18) is then described. Note that, in the processing in step S11 and subsequent steps, the content calculated in step S10 is used to create a question to the target user. In the processing in step S17 and subsequent steps, the content calculated in step S10 is used for recommendation.

In step S11, the control unit 20 extracts an item (store) that can be output to the target user based on the current position of the target user from the insufficient information (step S11). That is, the control unit 20 extracts a store that can be recommended from hamburgers and French food which are insufficient information based on the current position of the target user by the function of the output unit 21b. Specifically, the control unit 20 acquires the current position of the target user, that is, the position of the navigation system 50. Then, the control unit 20 refers to the content information 30b and extracts a store (for example, a store within a radius of 5 Km) corresponding to the acquired current position of the target user from the facility coordinates corresponding to the facility IDs. It is assumed in the embodiment illustrated in Fig. 5 that stores extracted in this way are "ABC Burger" and "XYZ French".

Next, the control unit 20 extracts an item (store) that can be output to the target user based on the current position of the target user from the insufficient information in the user information of the similar user (step S12). That is, the control unit 20 extracts a store that can be output to the target user from the user information of the similar user by the function of the output unit 21b. Specifically, by the function of the user information acquisition unit 21a, the control unit 20 refers to the user information 30c and acquires the user information of the similar user (that is, the user information 2 described in the example of Fig. 4). Then, the control unit 20 compares the acquired user information of the similar user with the content information 30b, and acquires insufficient information that is insufficient for the content information 30b in the user information of the similar user. Note that, in determining whether or not there is insufficient information, it is determined that there is insufficient information in a case where the amount of information of the corresponding content does not meet a predetermined criterion. In the example illustrated in Fig. 4, in the user information 2 of the similar user, it is unknown whether or not the similar user is interested in facilities that provide Italian food and French food, and the interest attribute thereof is also unknown. That is, in the example of Fig. 4, Italian food and French food correspond to the insufficient information of the similar user.

Then, when acquiring the insufficient information in the user information of the similar user, the control unit 20 extracts a store that can be output to the target user based on the current position of the target user from the insufficient information of the similar user by the function of the output unit 21b. That is, the control unit 20 extracts a store that can be recommended based on the current position of the target user from Italian food and French food which are insufficient information of the similar user. Specifically, the control unit 20 refers to the content information 30b and extracts a store (for example, a store within a radius of 5 Km) corresponding to the current position of the target user acquired in step S11 from the facility coordinates corresponding to the facility IDs. It is assumed in the embodiment illustrated in Fig. 5 that the store extracted in this way is "XYZ French".

Next, the control unit 20 extracts (generates) the content corresponding to the interest attribute on the basis of the insufficient information extracted in Step S11 and Step S12 (Step S13). Specifically, by the function of the output unit 21b, the control unit 20 extracts insufficient information corresponding to both the insufficient information in the user information of the target user extracted in step S11 and the insufficient information in the user information of the similar user extracted in step S12. Then, the control unit 20 extracts one of a plurality of interest attributes with reference to the user information 30c of Fig. 4, associates the extracted interest attribute with the insufficient information corresponding to both the target user and the similar user, and generates the content corresponding to the interest attribute. More specifically, the control unit 20 refers to the user information 30c and extracts, from the items extracted in steps S11 and S12, insufficient information in the user information of both the target user and the similar user (that is, information related to a content that does not meet the criterion for the amount of information). As described above, "ABC Burger" and "XYZ French" are extracted as the insufficient information of the target user, and "XYZ French" is extracted as the insufficient information of the similar user. Then, referring to the user information 30c of Fig. 4, information related to the degree-of-interest and the interest attribute for the facility genre "hamburgers" is recorded in the user information 2 of the similar user. Since the similar user is assumed to have an interest similar to that of the target user, the degree-of-interest of the target user in "hamburgers" is currently unknown, but it can be estimated from the degree-of-interest of the similar user that the degree-of-interest of the target user is similar. That is, since the degree-of-interest of the similar user in "hamburgers" is "⊚", it is also possible to estimate that the degree-of-interest of the target user in "hamburgers" is "⊚" or "o". Since such estimation can be performed, the control unit 20 determines that the information to be preferentially collected is a content insufficient in the user information of both the target user and the similar user. As a result, it is possible to preferentially collect information that cannot be estimated from the user information 30c of both the target user and the similar user. In the above example, "French food" is extracted as the content insufficient in the user information of both the target user and the similar user, and is determined as the content to be preferentially collected. Then, the control unit 20 refers to the user information 30c illustrated in Fig. 4, associates the interest attribute of "near the station" with "French food", for example, and extracts "French food near the station" as the content corresponding to the interest attribute.

Here, the information output from the control unit 20 by the function of the output unit 21b may include information such as a facility genre, a facility name, a price range of a facility, and a facility review in addition to information related to a distance such as being close to a station, and includes at least one piece of information. The facility genre is, for example, a food genre such as "French food" or "hamburgers", but is not limited thereto, and may be a larger classification such as fast food. The facility name is a store name of a facility, and is "XYZ French" or the like in the above example. The price range of the facility includes a conceptual price such as "reasonable" or a specific price such as "5000 yen to 6000 yen". Furthermore, the facility review may be "high evaluation", "high score", or the like, or may be a specific evaluation score such as "4 or more of 5-grade evaluation". The information output by the control unit 20 corresponds to "information related to a content".

Note that, in consideration of the recommendation to the target user and the update of the user information of the target user, the information output by the control unit 20 preferably corresponds to any one of the interest attribute of the target user (user information 1) and the interest attribute of the similar user (user information 2), but is not necessarily the information recorded therein. For example, it may be information indicating a time period such as "lunch" or "dinner" which is not recorded in the user information illustrated in Fig. 4.

Next, the control unit 20 asks the target user a question about an item of the extracted content (step S14). Specifically, by the function of the output unit 21b, the control unit 20 asks the target user a question about the item "XYZ French" of the content "French food near the station" extracted in step S13. For example, the control unit 20 asks the target user a question as to whether or not the target user is interested in French food such as "How about XYZ French? (Are you interested in it?)". Note that, for example, in a case where there is information held by the store "XYZ French" (for example, information such as a specialty), the control unit 20 may ask about the information held by the store (for example, "How about a specialty, oo quiche?"). As described above, by the function of the output unit 21b, the control unit 20 asks the target user about the insufficient information that does not meet the criterion for the amount of information in both the target user and the similar user. Then, the control unit 20 requests the target user to input an answer to the question. Note that this request (that is, output) to the target user is output to the user I/F unit 50d such as a speaker or a display unit of the navigation system 50.

Next, the control unit 20 determines whether or not there is an answer from the target user (step S15). That is, the control unit 20 determines whether or not the target user answers the request to input the information related to the content that does not meet the criterion by the function of the output unit 21b. Specifically, by the function of the output unit 21b, the control unit 20 determines whether or not there is an answer such as interested or not interested to a question such as "How about XYZ French?" from the target user. Note that the answer from the target user is transmitted from the navigation system 50 to the recommendation system 10. In addition, the user may select "interested" or "not interested" by a voice input or by an input operation to the user I/F unit 50d. This input operation may be an input operation such as inputting specific character texts or touching a display such as "good/bad". Alternatively, the user may answer by some gesture input. In a case where a negative determination is made in step S15, that is, in a case where there is no answer from the target user, the control unit 20 returns without performing the subsequent processing. On the other hand, in a case where an affirmative determination is made in step S15 because there is an answer from the target user, the processing proceeds to step S16.

In step S16, the control unit 20 records the answer input from the target user in the recording medium 30 and updates the user information of the target user. Specifically, by the function of the update unit 21c, the control unit 20 associates the contents of the question asked in step S14 with the answer to the question from the target user, and records (that is, stores) the associated question and answer in the recording medium 30. Then, the control unit 20 updates the user information (that is, user information 1) of the target user by the function of the update unit 21c. This makes it possible to compensate for the insufficient information of the user information 1. In the embodiment illustrated in Fig. 5, the control unit 20 receives an answer to "question about French food", which is insufficient information, as input data to the user information 1. In a case where the answer input from the user in response to the request from the output unit 21b is a positive answer, the update unit 21c updates information of the degree-of-interest and the interest attribute related to French food answered by the user. The degree-of-interest can be indicated in multiple stages as described above. Therefore, in a case where the answer to French food from the user is a positive answer, the degree of interest in French food is "⊚" or "o", and the update unit 21c updates the information of the degree-of-interest as the user information. On the other hand, in a case where the answer input from the user is a negative answer, the degree-of-interest in French food is "Δ" or "×", and the update unit 21c updates the information of the degree-of-interest as the user information.

Furthermore, in step S16, in a case where there is an answer from the target user in step S15 and the answer is a positive answer, the item of the corresponding content may be recommended to the target user. In the embodiment illustrated in Fig. 5, as described above, "XYZ French", which is a store that can be output based on the current position of the target user, is extracted from the insufficient information of both the target user and the similar user, and a question is made as to whether or not the target user is interested in "XYZ French". Therefore, the control unit 20 recommends "XYZ French" as a specific item for the answer from the user by the function of the output unit 21b. Note that, in the processing of step S13, in a case where a plurality of stores that can be output are extracted (for example, five stores), the control unit 20 recommends a specific store (item) to the target user by, for example, sorting the extracted five stores in order of proximity from the current position of the target user or in order of high review.

In addition, when the recommendation is performed, the control unit 20 may display facility information of and routes to the facility to be recommended to the navigation system 50 on a display or the like by the function of the output unit 21b. Furthermore, in a case where an answer to the recommendation is transmitted from the user, the control unit 20 receives the answer as input data to the user information 1, and, updates the user information 30c by the function of the update unit 21c.

As described above, in the embodiment illustrated in Fig. 5, the control unit 20 acquires the insufficient information in the user information of both the target user and the similar user. Then, for the information insufficient for both the users, the control unit 20 updates the user information 30c on the basis of the input of the target user himself or herself. Therefore, the user information 30c matches the tastes and preferences of the target user himself or herself as compared with a case where the user information 30c of the target user is updated simply using the user information of another person. Furthermore, in the embodiment illustrated in Fig. 5, since the area that is the insufficient information of the target user and is also the insufficient information of the similar user is set as the insufficient information of the target user, the user information can be enriched at an early stage as compared with the case of updating the user information 30c on the basis of the insufficient information of only the target user.

Next, another processing performed in parallel after step S10 will be described. As described above, in the embodiment illustrated in Fig. 5, after the object to be recommended to the target user is calculated in step S10, the processing proceeds to steps S11 and S17. Since the processing in step S11 and subsequent steps has been described above, the processing in step S17 and subsequent steps will be described here.

In step S17, the control unit 20 outputs the object to be recommended calculated in step S10. Specifically, the control unit 20 recommends at least one of the contents "hamburgers and French food" insufficient for the target user calculated in step S10 to the target user by the function of the output unit 21b. The contents to be recommended may be, for example, "How about French food (or hamburgers)?". Note that the recommendation output to the target user is output to the user I/F unit 50d such as a speaker or a display unit of the navigation system 50.

Next, the control unit 20 asks a question about the answer to the recommendation from the target user (step S18). Specifically, the control unit 20 receives an input of the answer to the recommendation performed in step S17 from the target user by the function of the output unit 21b. The target user operates the display unit in the user I/F unit 50d, for example, to provide an answer such as "good/bad". Note that the answer of the target user may also be an answer by text, an answer by voice output, or the like.

Then, the control unit 20 asks a specific question about the answer of the target user. For example, in a case where the answer of the target user is a positive answer such as "good" or "in the mood of French food (or hamburgers)", the control unit 20 asks a question such as "How about XYZ French (or ABC Burger)?" by the function of the output unit 21b. When asking the question, the control unit 20 proceeds the processing to step S15.

On the other hand, in a case where the answer of the target user is a negative answer such as "bad", "not in the mood of French food (or hamburgers)", or "not in the time period of eating", the control unit 20 asks a question such as "what mood?", for example. When asking the question, the control unit 20 proceeds the processing to step S15.

Note that, in step S18, even in a case where there is no answer from the target user such as "good/bad", the control unit 20 may directly ask a specific question such as "How about XYZ French (or ABC Burger)?" by the function of the output unit 21b.

In step S15, the control unit 20 determines whether or not there is an input of an answer to the specific question asked in step S18 from the target user. In a case where some answer such as "want to eat at XYZ French (or ABC burgers)" or "not in the mood of XYZ French (or ABC burgers)" is obtained from the target user, a positive determination is made in step S15, and the control unit 20 proceeds the processing to step S16. On the other hand, in a case where there is no answer to the question asked in step S18 from the target user, a negative determination is made in step S15, and the control unit 20 returns without performing the subsequent processing.

In step S16, the control unit 20 records the answer input from the target user in the recording medium 30 and updates the user information of the target user. Specifically, by the function of the update unit 21c, the control unit 20 associates the contents of the question asked in step S18 with the answer to the question from the target user, and records the associated question and answer in the recording medium 30. Then, the control unit 20 updates the user information (that is, user information 1) of the target user by the function of the update unit 21c.

Note that, in the embodiment of Fig. 5, an example in which the processing of step S11 and subsequent steps and the processing of step S17 and subsequent steps are performed in parallel after step S10 is described. However, these processing may be performed independently of each other. In addition, in the embodiment of Fig. 5, in a case where the processing of calculating the object to be recommended is performed in step S10 on the premise that the processing in step S11 and subsequent steps is performed, but the processing in steps S11 to S16 is performed, step S10 may be skipped.

The above embodiment is an example for carrying out the present disclosure, and various other embodiments can be adopted. For example, the recommendation system 10 may include a plurality of devices (a server, a client, and the like) Some of the functions of the user information acquisition unit 21a, the output unit 21b, and the update unit 21c constituting the recommendation system 10 may be implemented by the control unit 20, and the remaining functions may be implemented by the control unit 50c of the navigation system 50. In addition, as long as the control described above can be executed, some configurations of the embodiments may be omitted, or the order of processing may be changed or omitted.

Furthermore, in the embodiment described above, only "ABC Burger" is shown as an example in which the control unit 20 extracts the shop that can be output based on the current position of the user or the current time period from the insufficient information, but a plurality of items may be extracted. In addition, there may be a plurality of contents (that is, facility genres) of the extracted items. For example, in the example of Figs. 2A and 2B, there are hamburgers and French food in the user information 1 as the insufficient information. In this state, it is assumed that a store (ABC Burger) that provides hamburgers and a store (XYZ French restaurant) that provides French food are extracted based on the current position of the target user or the current time period. In this case, the control unit 20 requests the target user to make an input based on the degree of enrichment of the content (that is, asks a question as to whether or not the target user is interested in the insufficient content). Specifically, the control unit requests the target user to make an input for a content determined to have a relatively high degree of enrichment, and does not request the target user to make an input for a content determined to have a relatively low degree of enrichment. Here, the degree of enrichment is an index indicating whether or not the amount of information (amount of information) related to a predetermined content is larger than the amount of information related to other contents. The parameter for the amount of information includes, for example, the number of stores, and it can be said that a content with a relatively large number of stores has a high degree of enrichment, and a content with a relatively small number of stores has a low degree of enrichment.

In the example of Fig. 2A, the number of French restaurants is 20, and the number of hamburger restaurants is 50. Therefore, the degree of enrichment of hamburgers is higher than the degree of enrichment of French food, and in this case, the control unit 20 requests the target user to input whether or not the target user is interested in hamburgers, and does not request the target user to input whether or not the target user is interested in French food. Note that, in a case where the target user is requested to input a plurality of contents in the insufficient information, the target user is requested to preferentially input a content with high degree of enrichment. A describing is given using the example of Fig. 2A. In a case where an input is requested as to whether or not the target user is interested in any facility genre of hamburgers and French food, the user is requested to preferentially make an input for hamburgers with high degree of enrichment as the content information. Then, after the input request for hamburgers is made, the input request for French food is made.

Note that the degree of enrichment is only required to be an index indicating whether or not the amount of information related to a certain content is larger than the amount of information related to another content. Therefore, the parameter for determining the degree of enrichment may be, for example, the total number of reviews in addition to the number of stores described above. In the example of Fig. 2A, the total number of reviews is 110 for hamburgers and 60 for French food, and the degree of enrichment of hamburgers is higher than that of French food. Therefore, in this case, the control unit requests the target user to make an input for hamburgers (or to give priority to hamburgers).

Furthermore, in the embodiment described above, in a case where there is an answer to whether or not the target user is interested in the content of the extracted item from the target user and the answer is a positive answer (that is, in a case where the target user is interested in the target content), the control unit 20 may recommend the item of the corresponding content to the target user, but the control unit 20 may directly recommend the item of the corresponding content to the target user. That is, the control unit 20 may directly recommend ABC Burger to the target user without requesting an answer to whether or not the target user is interested in the content of the extracted item (for example, whether or not the target user is interested in hamburgers). Then, in a case where the extracted item is directly recommended without asking a question about the content, the control unit 20 receives an answer for the item as an answer to the content and updates the answer as the user information 30c.

Moreover, in the embodiment described above, the control unit 20 compares the content information 30b with the user information 30c and grasps the information insufficient for the user information of the target user. However, when "information insufficient for the user information of the target user" is grasped, the information may be grasped simply by referring to the user information 30c. That is, in a case where the insufficient information can be grasped without any comparison with the content information 30b, the insufficient information may be acquired by referring to only the user information 30c.

In addition, in the present embodiment, the control unit 20 requests the user to input information related to a content that does not meet a predetermined criterion in the user information, but the "criterion" at this time may be defined by providing a criterion in advance for each facility genre in addition to the ratio to the predetermined criterion.

Furthermore, in the embodiment described above, when the control unit 20 extracts an item that can be output to the user based on the current position of the user or the current time period from the insufficient information, "the current position of the user or the current time" is used as a condition, but this condition is not limited as long as it is a condition for specifying the insufficient information. For example, the interest attribute of the user may be used as the condition. That is, in the example of Fig. 2B, the target user records keywords such as "near the station" and "reasonable" in facility genres (Italian food, ramen, and the like) other than insufficient facility genres. Therefore, when extracting items of hamburgers and French food which are insufficient information, items with attributes such as "near the station" and "reasonable" may be extracted.

In addition, the content to be provided, which is recommended by the recommendation system 10, is not limited to a dining facility. For example, a facility that can be a destination in a navigation function such as a commercial facility is included. Furthermore, the content to be provided may be a product, a car function (such as a power window, a sunroof, an audio, and shift control of an automatic transmission), event information, and related information such as a product development history. Moreover, the aspects of the present disclosure can also be applied to a case where recommendations of products or services are presented in a shopping site or another site other than the navigation system, for example.

Furthermore, the method of the present disclosure can also be applied as a program or a method. In addition, the system, the program, and the method described above may be implemented as a single device or may be implemented by using a component shared with each unit included in a vehicle, and include various modes. Moreover, it can be changed as appropriate in a manner that a part is software and a part is hardware. Further, aspects of the disclosure may be embodied as a non-transitory recording medium storing a program for controlling a system. It is needless to mention that, the recording medium of the program may be a magnetic recording medium or a semiconductor memory, and can be considered in exactly the same manner in any recording medium to be developed in the future.

### REFERENCE SIGNS LIST

- 10: recommendation system
- 20: control unit
- 21: recommendation program
- 21a: user information acquisition unit
- 21b: output unit
- 21c: update unit
- 30: recording medium
- 30a: map information
- 30b: content information
- 30b: user information
- 41: communication unit
- 50: navigation system
- 50a: communication unit
- 50b: GNSS reception unit
- 50c: control unit
- 50d: user I/F unit

## Claims

1. A recommendation system comprising:
a user information acquisition unit that acquires user information indicating an interest of a user in a content to be provided;
an output unit that outputs request information for requesting the user to input information related to a content with a relatively small amount of information as compared with a predetermined comparison target in information for each content recorded in a recording medium as the user information; and
an update unit that updates the user information on a basis of information input by the user in response to the request information.

2. The recommendation system according to claim 1, wherein the request information requested by the output unit includes information as to whether the user has an interest in the content with a relatively small amount of information, and the content with a relatively small amount of information is determined based on a current position of the user or a current time period.

3. The recommendation system according to claim 2, wherein the update unit receives an answer to whether the user has the interest as input data to the user information.

4. The recommendation system according to any one of claims 1 to 3, wherein the output unit recommends the content with a relatively small amount of information to the user, and
the update unit receives an answer to the recommendation as input data to the user information.

5. The recommendation system according to any one of claims 1 to 4, wherein in a case where there are a plurality of the contents with a relatively small amount of information, the output unit requests the user to make the input based on a degree of enrichment of the plurality of contents.

6. The recommendation system according to claim 1, wherein
the user information acquisition unit further acquires user information of a similar user whose interest in the content is similar to the user, and
the output unit outputs the request information for requesting the user to input information related to the content with a relatively small amount of information in user information of the user and with a relatively small amount of information in user information of the similar user.

7. The recommendation system according to claim 1, wherein
the request information includes information related to the content, and
the information related to the content includes at least any one of a facility genre, a distance to a facility, a facility name, a price range of a facility, or a facility review.

8. The recommendation system according to claim 1, wherein the update unit records the information input in the recording medium.
